# EUROPEAN PATENT SPECIFICATION

(11) **EP 1 259 751 B1**
(45) Date of publication and mention of the grant of the patent: **21.04.2004**
(21) Application number: 01942703.8
(22) Date of filing: 18.01.2001
(51) Int. Cl.: F16L 59/02

(54) **UNITARY VAPOR RETARDER FOR CHILLED PIPE INSULATION**
EINTEILIGE DAMPFSPERRE FÜR DIE ISOLIERUNG EINES GEKÜHLTEN ROHRES
RETARDATEUR DE VAPEUR UNITAIRE POUR ISOLATION DE TUYAU REFRIGERE

(30) Priority: 21.01.2000 US 177515 P; 14.12.2000 US 737051
(43) Date of publication of application: 27.11.2002
(73) Proprietor: OWENS CORNING, Toledo, Ohio 43659 (US)
(72) Inventor: SHAFFER, Roy, E., Granville, OH 43023 (US); CHOUDHARY, Manoj K., Reynoldsburg, OH 43068 (US)
(74) Representative: West, Alan Harry
(86) International application number: PCT/US2001/001708
(87) International publication number: WO 2001/053740

(56) References cited:
- US-A- 5 441 083
- US-A- 5 520 009
- US-A- 5 690 147

## Description

### TECHNICAL FIELD AND INDUSTRIAL

### APPLICABILITY OF THE INVENTION

The invention is directed toward an insulation article, more particularly an insulation article for a cold pipe exhibiting a wicking ability to readily transport moisture from the interior to the outside of the pipe and insulation article assembly, where the moisture can evaporate without causing damage to the pipe or insulation. In one embodiment of the invention a unitary vapor retarder, including perforations to allow the evaporation of water from within the vapor retarder, encompasses the pipe insulation and wicking material.

### BACKGROUND OF THE INVENTION

It is known to insulate pipes with insulating material made from fiberglass or other materials having a large amount of interstitial voids. The void structure provides an insulating effect, but also allows water vapor to pass from the outside environment to the surface of the pipe. When the pipe contains a liquid or gas at sub-ambient temperatures, the moisture will condense onto the pipe. Liquid water trapped inside the insulation reduces the insulating effect and also tends to degrade the structure of the insulation. The liquid water may also pool within the insulation product and eventually drip causing stains in ceiling materials installed beneath pipes.

Since it is difficult to build or maintain a hermetically sealed pipe insulation structure, it is inevitable that moisture will invade the insulation through cracks, fissures, joints, etc. of the insulation to eventually condense on the pipe. Therefore it is highly desirable to have a mechanism or structure which can transport water away from the pipe to the exterior of the insulation, where it can evaporate.

Vapor retarding products are utilized in the insulation of piping systems that operate below ambient temperatures. The vapor retarders are usually based upon thin films formed from metal foils or polymers or the vapor retarders may be formed of closed cell foamed polymers, foam glass, mastics. Some retarders lack mechanical strength and resistance to punctures and abrasion. As a result, the vapor retarders become porous and allow moisture to penetrate inside the insulation. Some vapor retarder materials are also inherently porous. Metal foils are prone to pin holes arising from impurities in the metal or due to handling during manufacturing and installation. Metal foils are also prone to corrosion in the presence of water. Polymers are intrinsically permeable due to their molecular structure, and they must be sufficiently thick to minimize the permeability.

A conventional vapor retarder technology is to surround the pipe insulation with a retarder made up of a sandwich structure of aluminum foil and kraft paper with an internal layer of fiberglass scrim. The conventional vapor retarder is placed on the outside of the insulation so that the aluminum foil faces the insulation and the kraft paper faces the outer environment. An adhesive is used to join the vapor retarder to the insulation. Some products are made of foil, kraft paper and, polyethylene. The foil retarder being on the outside surface. The polyethylene is heated and used as the adhesive.

The conventional art has been found to be deficient because of the difficulty in providing and maintaining retarder properties of the installed product. Difficulties in sealing the horizontal and butt-end joints as well as the inevitable field-fabricated parts allow water vapor to penetrate and condense on the chilled pipes. Embrittlement of polymer insulating products and sealants allow vapor to enter through cracks, crevices and failed sealed joints. Mechanical breaks, punctures, etc., also provide portals into which moisture can invade.

As has been shown, there is a need for a superior insulating product that allows any condensed water to be carried to the surface of the insulation by capillary action and allowed to evaporate to the atmosphere. The insulating product needs to be robust and easy to install. The insulating product needs to operate in an efficient manner, so that the insulation will be kept dry even when the vapor retarder is permeable.

A known system to remove moisture from an insulation system has been developed by Korsgaard, U.S. Patent 5,441,083. Korsgaard discloses an insulation system for a cold pipe that includes an inner water-absorbing layer, an intermediate heat insulating layer, and an outer water-absorbing layer, where the inner and outer layers are in contact through a slot. Korsgaard teaches a plastic film covering the area over the slot and a tenuous and indirect path to the environment into which the water evaporates. Korsgaard teaches a plastic film around the insulation and a separate plastic film adhered to the wicking material at a longitudinal slit to seal the slit . Korsgaard also teaches a plastic film to surround the insulation with a flap that extends over the slit and the wicking material extends beyond the flap. However, this laminate serves to diminish the functional surface area from which water may evaporate to the atmosphere or extends the distance the liquid water must travel via capillary action in order to evaporate to the atmosphere.

### SUMMARY OF THE INVENTION

The present invention provides a technology for the efficient removal of condensed water from the surface of insulated chilled pipes.

The invention provides a more efficient and effective technology for transporting water from chilled pipes to the surface than the conventional insulation technology.

The invention, in part, also provides an insulation article having a vapor retarder. The vapor retarder material can be any polymer or foil film used for that purpose. The vapor retarder inhibits the transfer of moisture from the environment and the insulation while allowing for the evaporation of moisture from the wicking material to the environment. In a preferred embodiment the vapor retarder includes a flap which extends over the slit in the insulation material. The flap preferably includes perforations or holes in the area of the wicking material to allow water vapor to evaporate from the wick.

It is preferable according to the invention to use a wick to provide a media for capillary removal of water that condenses on insulated chilled pipes. Polymeric wick materials such as polyester or nylon can be joined to the vapor retarder by thermal welding to form a continuous loop. A variety of vapor retarder materials may be thermally welded to a polymer fabric. In addition, materials such as polyester nylon can attach to fibrous glass insulation products without the aid of adhesives or additional mechanical attachments. Friction firmly attaches to the wicking media to fibrous glass insulation to allow fabrication, shipment and installation.

### BRIEF DESCRIPTION OF THE DRAWINGS

The present invention will become more fully understood from the detailed description given hereinbelow and the accompanying drawings which are given by way of illustration only, and thus do not limit the present invention.

Fig. 1A-1D are cross sectional views of preferred embodiments of the present invention.

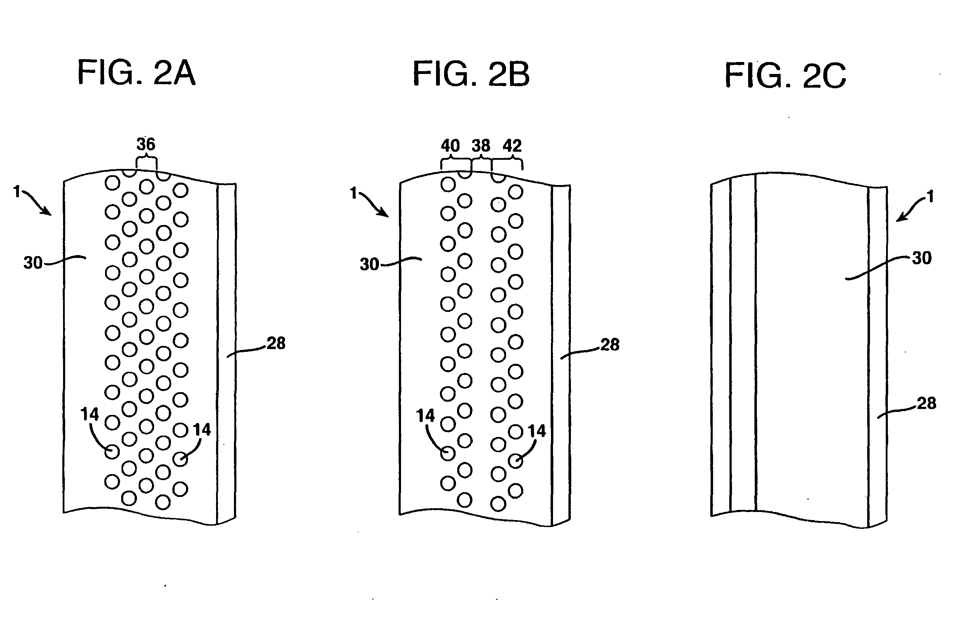

Figs. 2A-2C are plan views of preferred embodiments of the present invention including various perforations including micropores.

### DETAILED DESCRIPTION AND PREFERRED EMBODIMENTS OF THE INVENTION

Objectives of the present invention will become more apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

The insulation assembly 1 includes a tubular sleeve of insulation 4, such as mineral or polymer insulation; the sleeve includes a slit 16 from end to end to allow the installation of the assembly 1 on a pipe 2. A wicking material 8 is placed in the interior of the sleeve 4 and extends outwardly through slit 16 and terminates outside the sleeve 4 in outer edges 20, 22. A double layer of wicking material 8 is disposed inside of the longitudinal slit 16

The present invention provides an insulation assembly 1 that is quickly and easily installed on pipe 2. Typically, the insulation assembly of the present invention is installed on a pipe 2, flap 30 is folded over the edges 20, 22 of the wicking material 8 and is typically adhered to the exterior of vapor retarder 10.

The wicking material 8 is preferably a non-woven material that can be formed from a polymer or natural fiber. One suitable polymer for the wicking material is rayon. Rayon fibers are striated, or include channels, along the length of the fiber, which provide capillary channels in individual fibers so the wick does not rely upon capillary action formed in the channel between two adjacent fibers. Rayon fibers are striated by their manufacture; it is possible to form striations in other polymers for example by forming trilobal fibers of any polymer material. Any polymer fiber exhibiting a striated structure would provide improved wicking properties. The wicking material can have a vapor retarding material laminated to the interior surface to inhibit water vapor from penetrating the insulation and condensing onto the pipe surface.

The wick transports any water that condenses on the pipe to the surface of the insulation assembly and allows the water to evaporate without dripping. The wicking material 8 is made from a porous or semi-porous, fibrous material. Rayon is useful in the present invention and may be thermally or ultrasonically welded so that it may be incorporated into the piping and insulation without utilizing coatings and/or adhesives.

There are several methods to form the wicking web. The fibers can be laid down dry and the acrylic emulsion can be applied by flooding and extracting. Curing is usually carried out by heating the web. Alternately, the fiber can be laid down dry, followed by spraying on the emulsion and baking to cure. Standard fiber binding emulsions such as acrylic or EVA (ethylene vinyl acetate) can be utilized. A black or dark color wick has the aesthetic advantage of masking stains on the surface of the insulation assembly.

The wicking material can be used with all standard insulation materials. The insulation materials include mineral wool, fiberglass, elastomers, rubber, foam, and polyester. The wicking material is compatible with all types of piping systems.

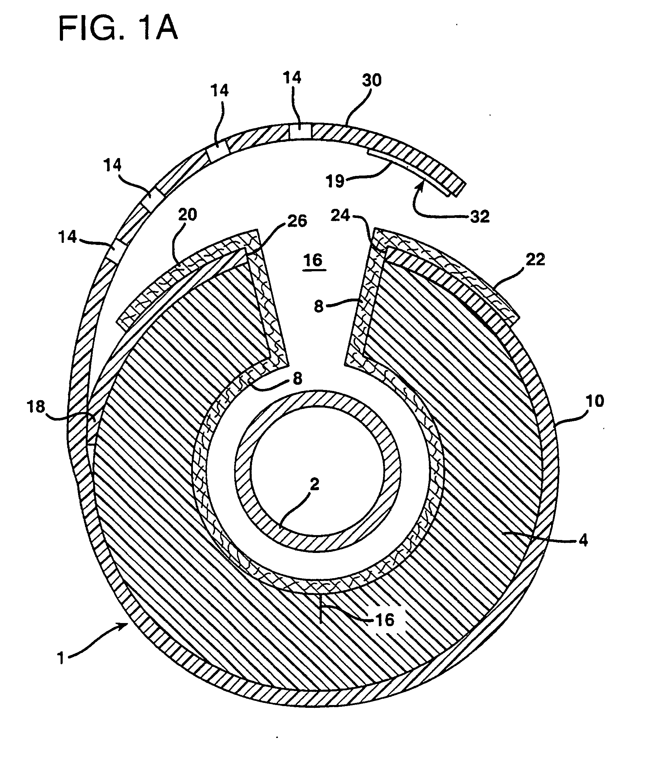

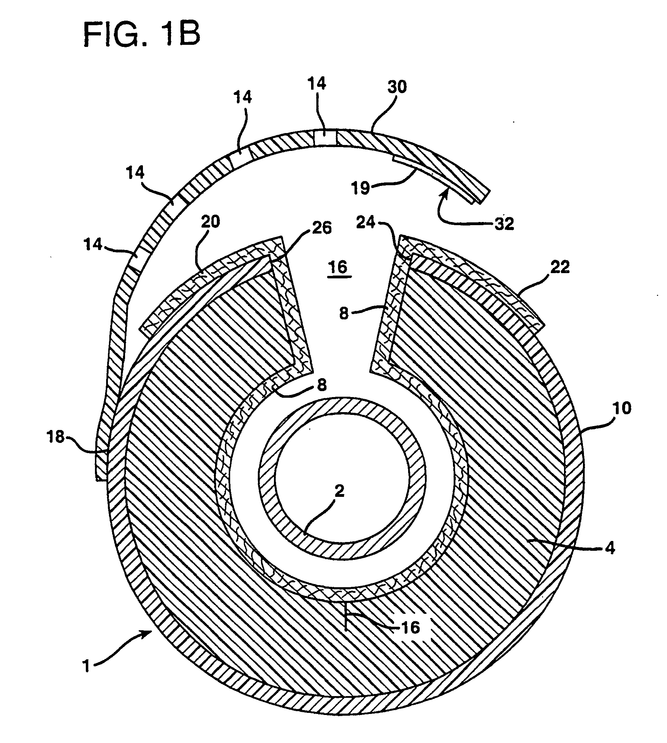

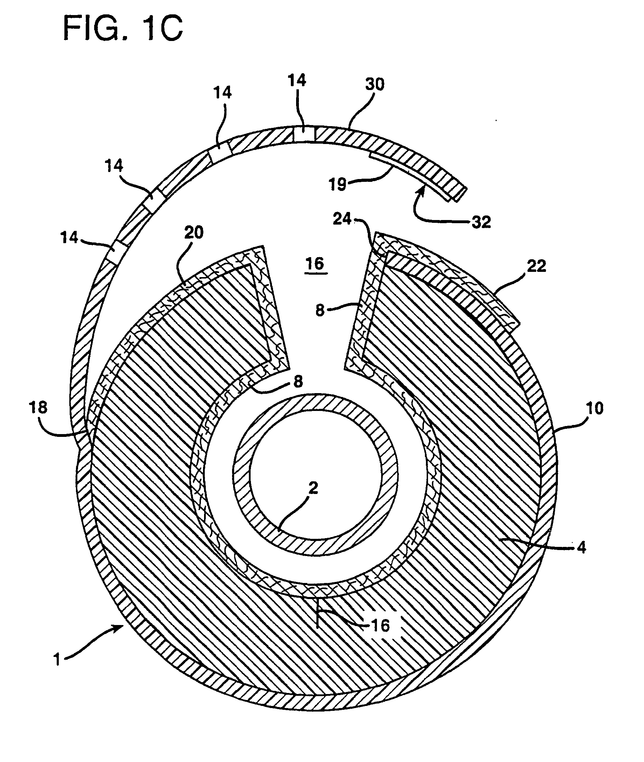

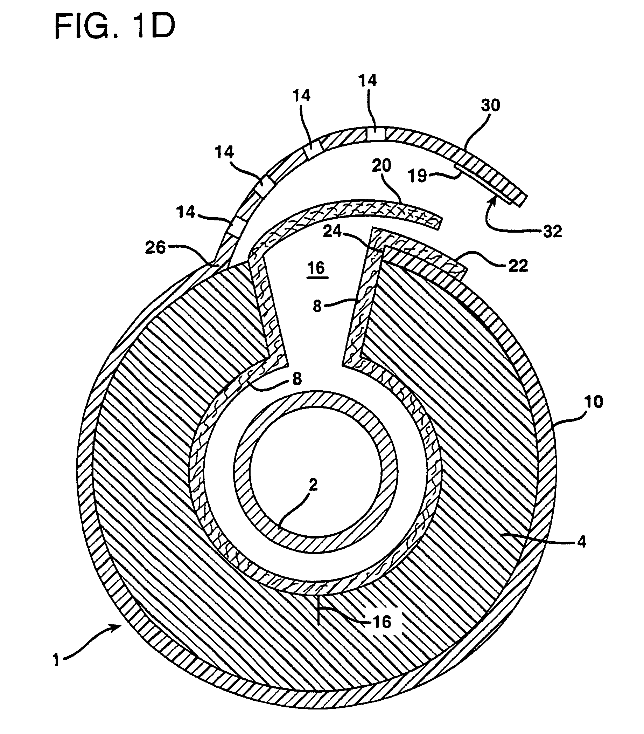

Fig. 1 is a cross sectional view of an embodiment of the present invention. A pipe 2 is made of copper, iron, mild steel, stainless steel, inconel, brass, other metal, PVDF, polypropylene, PVC, Polyethylene, nylon, or other suitable plastic. The pipe can optionally be coated with an anticorrosive coating such as epoxy (not shown). Surrounding the pipe 2 is a cylindrical layer of insulating material 4. The insulating material can be made of mineral wool, fiberglass, and plastic.

The vapor retarder 10 is a preferred component of the invention. A perfect seal of the insulation assembly is difficult to attain, since any vapor retarder will tend to become compromised at a seam, a crack, or an accidental puncture. However, even if a perfect seal is not attained, the vapor retarder 10 is still necessary to retard the ingress of water into the insulation 4 to condense on the pipe 2, where it subsequently must be removed by wicking. The wicking material 8 is preferably formed from one piece of material such that the wicking material enters the insulation through a longitudinal slit 16 in the insulation 4. The longitudinal slit 16 in the insulation 4 enables the insulation to open or clamshell so as to allow the installation of the insulation on the pipe 2.

Surrounding the insulating material 4 is a vapor retarder 10 that inhibits the transfer of moisture of between the environment and the insulation. The vapor retarder is a sheet of material that surrounds the insulation. The vapor retarder 10 preferably comprises polyester, polypropylene, polyethylene or vinyl. The edges 24, 26 of the vapor retarder are preferably heat or ultrasonically laminated to the edges 20, 22 of the wick. Typically the perm value of the vapor retarder should be as low as possible but preferably less than 0.5 and more preferably less than 0.2. The vapor retarder 10 will encompass the outer diameter of the insulation 4. In one embodiment of the present invention, the edges 24, 26 of the vapor retarder 10 are adjacent at seam 18 as shown in Fig. 1A. The reduced distance between the edges 24, 26 inhibits the ingress of ambient moisture and the re-evaporation of liquid water from the wick and subsequent condensation on the pipe 2. This structure reduces the thermodynamic cost of water evaporation and reduces the probability of overloading of the wick and liquid water dripping from the wick. At seam 18 the flap 30, having openings 14, extends over the slit 16 and attaches to the vapor retarder 10 by means of a fastener 19.

When the evaporation rate is less than the rate of ingress of water vapor condensing on the pipe, the system becomes saturated and the wick may drip and the insulation will become damp, which will compromise thermal performance. To prevent this problem saturation flap 30 includes openings 14 to expose a predetermined amount of wicking material. The openings 14 may be of any size, typically the openings or perforations may be slots or holes having areas of between 0.04 in² and 3 in² (0.26 cm² and 19.36 cm²). The openings may be formed by any known method for example punching and laser cutting may be used. When using discrete openings, as opposed to micropores (discussed below), one important criterion is the amount of wicking material that is exposed to the atmosphere. The exposed surface area required is dependent on the diameter of the insulation assembly and the temperature of the pipe, as well as ambient temperature and relative humidity. Typically, the openings should reveal more than about 1 in² (6.5 cm²) per linear inch and preferably about 1.5 in² (9.7 cm² )per linear inch. In addition, films which are microporous and are impermeable to liquid water but which allow the transmission of water vapor are suitable. One such microporous film is disclosed in U.S. Patent No. 6,013,151 to Wu et al., which shows an incrementally stretched film having a vapor transmission rate of between 1000-4000 g/m²/day.

The route of the vapor retarder 10 around the insulation assembly can be traced referring to Fig. 1B. From the slit 16 the vapor retarder material loops around the outer circumference of the insulation 4. A flap 30 is joined to. vapor retarder 10 at the seam 18. An extra portion of the vapor retarder material extends to form a flap 30, which is sealed to the outside of the assembly to inhibit moisture and extraneous material from entering the slit. Flap 30 may be thermally bonded or adhesively bonded to the outer periphery of the vapor retarder 10 at seam 18. Heat sealing can be performed using a heat bar or the seam can be made using an adhesive or ultrasound. The seam 18 in the vapor retarder material 10 can also be formed by using an adhesive. The adhesives can include such standard adhesives as thermoplastic adhesives, UV curable adhesives and latex adhesives. One of the disadvantages of using adhesives is their extra cost. An important disadvantage of using adhesives is that the adhesive itself adds flammable material to the insulation, thereby increasing the fire hazard.

Fig. 1A shows an alternative embodiment in which the flap 30 is an integral part of the vapor retarder 10 and a separate extension 18 of vapor retarder is bonded to the interior of vapor retarder 10 where flap 30 separates from insulation 4. A third embodiment of the present invention is shown in Fig. 1C in which the edge 20 of wick material 8 extends from the slit to the vapor retarder 10 where flap 30 separates from insulation 4. Fig. 1D shows a fourth embodiment, in which the edge 20 of wick material 8 extends from the slit and is not attached to the vapor retarder 10. Flap 30 separates from insulation 4 at a position at or near the slit. The insulation assembly is installed on pipe 2, wicking material edge 20 is then wrapped over wicking edge 22 and flap 30 is secured to vapor retarder 10.

There are a number of options for sealing the flap. If the pipe has a small circumference, (1-inch (2.54 cm) copper pipe, 1-inch (2.54 cm) insulation width), frictional forces or static electricity may be sufficient to seal the flap 30. Preferably a strip of adhesive 19 (usually acrylic based, but other adhesives can be used) is applied to the flap 30, and the adhesive is covered by release paper 32. After installing the insulation, on the pipe, the release paper 32 can be peeled off and the flap 30 pressed flush with the outside of the insulation assembly so as to form a seal. Heat or ultrasonic welding can also be used to form the seal. The fully installed assembly will have the flap lying flush with the side of the assembly so that the flap has an arc of curvature approximately the same as the outside of the assembly.

A hermetic seal is not required for the invention because the wick can remove moisture. Thus, there are a number of alternative options for sealing the flap 30. The sealing options can include a non-continuous strip of pressure sensitive tape, hook-and-loop fastener technology, wire ties, nylon or plastic ties, staples, hot melt adhesives, other adhesives, heat welding and any other type of mechanical gripping such as pins, clamps, and snaps.

Since a hermetic or moisture-proof seal is not necessary the insulation gives superior results for less exacting tolerances for sealing and placing (and construction) of the vapor retarder. The invasion of moisture into the insulation can be tolerated, since it can be wicked. However, it is preferred that moisture be prevented from entering the insulation for thermodynamic reasons, the wicking mechanisms still depends on the evaporation of water, which has a high thermal cost. Therefore, the wicking out of excess water will result in a heat pump, which reduces the efficiency of the insulation, and results in higher energy costs.

The film thickness is an important parameter for the performance of vapor retarders. A metal foil vapor retarder frequently has a thickness of 0.35 mil. Impurities in the metal will result in the formation of pinholes when the metal is formed into a thin sheet. The pinholes are the mechanism by which moisture can pass through a metal foil vapor retarder. Moisture passes through a polymeric vapor retarder by a diffusion mechanism. Increasing the polymer film thickness will reduce the permeability of the vapor retarder. A thicker film will improve the resistance to mechanical damage and reduce water vapor permeability. The improvements in these properties must be balanced against the desire to meet industry requirements for flame spread such as UL 723 or ASTM E-84. Alternatively, two thinner layers or a coextrusion of polymer film can be used in place of one thicker layer.

Permeability is also dependent on the polymeric material. Permeability of vapor barriers and vapor retarding materials are measured according to ASTM E96 Proc. A. The unit of measurement of permeability is the Perm. Polyester film such as MELINEX 339 manufactured by DuPont, Circleville, Ohio is preferred for the vapor retarder. Other materials suitable for vapor retarders include polypropylene manufactured by Formosa, Plastics, polyethylene, nylon, polyester films such as MYLAR, polycarbonate polymer (SARAN), polyvinylidene chloride, polyvinylidene copolymers, any film forming copolymers, and co-extruded products which, for example, can contain polyester (which adds stiffness).

Continuous manufacture (not depicted) of the insulation assembly can be performed as part of the insulation manufacturing process. Insulation is manufactured by a continuous extrusion process. The cylinder of insulation continuously emerges from the extrusion head and is slit and then cut off into predetermined lengths. In the continuous manufacturing process both the vapor retarder and wicking materials are continuously fed from rolls in the direction of extrusion. Guides will ensure the proper wrapping of the vapor retarder and wicking material around the extruded cylinder of insulation. After slitting the insulation into a clamshell, the wicking material is folded into a loop and the seam formed, for example, with a heat sealer. A blade is positioned so as to push the wicking material into the clamshell opening. The insulation is finally cut into predetermined lengths.

## Claims

1. An insulation product which comprises:
a tubular layer of insulation (4) having an inner periphery and an outer periphery including a longitudinal slit (16) therein for allowing a pipe (2) to be received within the inner periphery of the insulation;
a wick (8) disposed within the inner periphery of the insulation and extending through the slit to the outer periphery of the insulation;
a vapor retarder (10) on the outer periphery of the insulation, including a flap (30) initiating on a first side (18) of the slit which extends over the slit and may be attached to the vapor retarder on a second side (28) of the slit; and
wherein the flap (30) further includes perforations (14) of sufficient size to allow vapor to evaporate from the wick at a rate equal to or greater than the allowed ingress of water vapor condensing on the pipe.

2. An insulation product according to claim 1, wherein the flap (30) is formed of a microporous material.

3. An insulation product according to claim 1 or claim 2, wherein the perforations (14) have an open area of at least 2.5cm² per linear cm (1 in² per linear inch) of pipe.

4. An insulation product according to claim 3, wherein the perforations (14) have an open area of at least 3.81cm² per linear cm (1.5 in² per linear inch) of pipe.

5. An insulation product according to any one of claims 1 to 4, wherein the vapor retarder (10) extends from the first side (18) of the slit to the second side (28) of the slit to encompass the layer of insulation (4) and includes a flap (30) attached to the vapor retarder on the first side of the slit and extending to the second side of the slit and attachable to the vapor retarder at the second side of the slit.

6. An insulation product according to claim 5, wherein the vapor retarder (10) covers the entire outer periphery of the tubular layer of insulation (4).

7. An insulation product according to any one of claims 1 to 4, wherein the vapor retarder (10) includes the flap (30) which extends to the first side (18) of the slit, the flap being attachable to the vapor retarder at the second side (28) of the slit to form a tubular member.

8. An insulation product according to claim 7, further comprising an extension (26) to the vapor retarder (10) extending from the flap to the first side of the slit.

9. An insulation product according to any one of claims 1 to 8, wherein the wick (8) is secured to the outer periphery of the vapor retarder (10).

10. An insulation product according to any one of claims 1 to 9, wherein the material of the wick (8) is of striated polymer fibers.

11. An insulation product according to claim 10, wherein the striated polymer is rayon.

12. An insulation product according to claim 10 or claim 11, wherein the material is a sheet formed of fibers that are chemically or thermally bonded.

13. An insulation product according to any one of claims 1 to 12, wherein the vapor retarder (10) is of a material selected from polyester film, polypropylene film, polyethylene, nylons, polycarbonate, polyvinylidene chloride, polyvinylidene copolymers, film forming copolymers, co-extruded products and polyester co-extruded products.

14. An insulation product according to claim 13, wherein the vapor retarder (10) is a polyester film having a thickness between 0.075 and 0.125 mm (3 and 5 mils).

## Patentansprüche

1. Isolierprodukt, das aufweist:
eine rohrförmige Isolierschicht (4) mit einem inneren Umfang und einem äußeren Umfang einschließlich eines Längsschlitzes (16) darin, so dass ein Rohr (2) innerhalb des inneren Umfangs der Isolierung aufgenommen werden kann;
einen Docht (8), der innerhalb des inneren Umfangs der Isolierung angeordnet ist und sich durch den Schlitz zu dem äußeren Umfang der Isolierung erstreckt;
eine Dampfsperre (10) auf dem äußeren Umfang der Isolierung, die eine Klappe (30) einschließt, die von einer ersten Seite (18) des Schlitzes ausgeht, die sich über den Schlitz erstreckt und an der Dampfsperre auf einer zweiten Seite (28) des Schlitzes befestigt werden kann; und
wobei die Klappe (30) Perforationen (14) einschließt, die eine ausreichende Größe aufweisen, damit Dampf aus dem Docht mit einer Geschwindigkeit verdampfen kann, die gleich oder größer als das ermöglichte Eindringen von Wasserdampf ist, der an dem Rohr kondensiert.

2. Isolierprodukt nach Anspruch 1, bei dem die Klappe (30) aus einem mikroporösen Material gebildet ist.

3. Isolierprodukt nach Anspruch 1 oder Anspruch 2, bei dem die Perforationen (14) eine offene Fläche von mindestens 2,5 cm² pro linearem Zentimeter (1 Zoll² pro linearem Zoll) des Rohrs haben.

4. Isolierprodukt nach Anspruch 3, bei dem die Perforationen (14) eine offene Fläche von mindestens 3,81 cm² pro linearem Zentimeter (1,5 Zoll² pro linearem Zoll) des Rohrs haben.

5. Isolierprodukt nach einem der Ansprüche 1 bis 4, bei dem die Dampfsperre (10) sich von der ersten Seite (18) des Schlitzes zu der zweiten Seite (28) des Schlitzes erstreckt, um die Isolierschicht (4) aufzunehmen, und eine Klappe (30) einschließt, die an der Dampfsperre auf der ersten Seite des Schlitzes befestigt ist und sich zu der zweiten Seite des Schlitzes erstreckt und an der Dampfsperre auf der zweiten Seite des Schlitzes befestigbar ist.

6. Isolierprodukt nach Anspruch 5, bei dem die Dampfsperre (10) den gesamten äußeren Umfang der rohrförmigen Isolierschicht (4) bedeckt.

7. Isolierprodukt nach einem der Ansprüche 1 bis 4, bei dem die Dampfsperre (10) die Klappe (30) einschließt, die sich zu der ersten Seite (18) des Schlitzes erstreckt, wobei die Klappe an der Dampfsperre auf der zweiten Seite (28) des Schlitzes befestigbar ist, um ein Rohrelement zu bilden.

8. Isolierprodukt nach Anspruch 7, das ferner einen Fortsatz (26) der Dampfsperre (10) umfasst, der sich von der Klappe zu der ersten Seite des Schlitzes erstreckt.

9. Isolierprodukt nach einem der Ansprüche 1 bis 8, bei dem der Docht (8) an dem äußeren Umfang der Dampfsperre (10) befestigt ist.

10. Isolierprodukt nach einem der Ansprüche 1 bis 9, bei dem das Material des Dochts (8) aus Furchen aufweisenden Polymerfasern ist.

11. Isolierprodukt nach Anspruch 10, bei dem das Furchen aufweisende Polymer Rayon ist.

12. Isolierprodukt nach Anspruch 10 oder Anspruch 11, bei dem das Material eine Lage ist, die aus Fasern gebildet ist, die chemisch oder thermisch gebunden sind.

13. Isolierprodukt nach einem der Ansprüche 1 bis 12, bei dem die Dampfsperre (10) aus einem Material ausgewählt aus Polyesterfolie, Polypropylenfolie, Polyethylen, Nylons, Polycarbonat, Polyvinylidenchlorid, Polyvinylidencopolymeren, folienbildenden Copolymeren, coextrudierten Produkten und mit Polyester coextrudierten Produkten ist.

14. Isolierprodukt nach Anspruch 13, bei dem die Dampfsperre eine Polyesterfolie mit einer Dicke zwischen 0,075 und 0,125 mm (3 und 5 mil) ist.

## Revendications

1. Produit d'isolation comprenant:
une couche tubulaire d'un isolant (4) dont la périphérie intérieure et la périphérie extérieure comportent une fente longitudinale (16) pour qu'un tuyau (2) puisse être reçu à l'intérieur de la périphérie intérieure de l'isolant;
une mèche (8) disposée à l'intérieur de la périphérie intérieure de l'isolant et s'étendant à travers la fente jusqu'à la périphérie extérieure de l'isolant; et
un retardateur de vapeur (10) disposé sur la périphérie extérieure de l'isolant et comprenant un rabat (30) qui commence sur un premier côté (18) de la fente, qui s'étend par-dessus la fente et qui peut être fixé au retardateur de vapeur sur un second côté (28) de la fente,
le rabat (30) comprenant, en outre, des perforations (14) de taille suffisante pour permettre à de la vapeur de se dissiper à partir de la mèche à une vitesse égale ou supérieure à celle à laquelle de la vapeur d'eau peut pénétrer pour se condenser sur le tuyau.

2. Produit d'isolation selon la revendication 1, dans lequel le rabat (30) est formé d'une matière microporeuse.

3. Produit d'isolation selon la revendication 1 ou la revendication 2, dans lequel les perforations (14) ont une surface d'ouverture d'au moins 2,5 cm² par cm linéaire (1 in² par pouce linéaire) de tuyau.

4. Produit d'isolation selon la revendication 3, dans lequel les perforations (14) ont une surface d'ouverture d'au moins 3,81 cm² par cm linéaire (1,5 in² par pouce linéaire) de tuyau.

5. Produit d'isolation selon l'une quelconque des revendications 1 à 4, dans lequel le retardateur de vapeur (10) s'étend depuis le premier côté (18) de la fente jusqu'au second côté (28) de celle-ci pour entourer la couche de l'isolant (4) et comprend un rabat (30) fixé au retardateur de vapeur sur le premier côté de la fente et s'étendant jusqu'au second côté de celle-ci pour pouvoir être fixé au retardateur de vapeur au niveau du second côté de la fente.

6. Produit d'isolation selon la revendication 5, dans lequel le retardateur de vapeur (10) couvre la totalité de la périphérie extérieure de la couche tubulaire de l'isolant (4).

7. Produit d'isolation selon l'une quelconque des revendications 1 à 4, dans lequel le retardateur de vapeur (10) comprend le rabat (30) qui s'étend jusqu'au premier côté (18) de la fente, le rabat étant apte à être fixé au retardateur de vapeur au niveau du second côté (28) de la fente pour former un élément tubulaire.

8. Produit d'isolation selon la revendication 7, comprenant également un prolongement (26) du retardateur de vapeur (10), qui s'étend depuis le rabat jusqu'au premier côté de la fente.

9. Produit d'isolation selon l'une quelconque des revendications 1 à 8, dans lequel la mèche (8) est assujettie à la périphérie extérieure du retardateur de vapeur (10).

10. Produit d'isolation selon l'une quelconque des revendications 1 à 9, dans lequel la matière de la mèche (8) est formée de fibres de polymère strié.

11. Produit d'isolation selon la revendication 10, dans lequel le polymère strié est de la rayonne.

12. Produit d'isolation selon la revendication 10 ou la revendication 11, dans lequel la matière est une feuille formée de fibres qui sont liées chimiquement ou thermiquement.

13. Produit d'isolation selon l'une quelconque des revendications 1 à 12, dans lequel le retardateur de vapeur (10) est formé d'une matière choisie dans le groupe constitué par un film de polyester, un film de polypropylène, un polyéthylène, les Nylons, un polycarbonate, un poly(chlorure de vinylidène), des copolymères de polyvinylidène, des copolymères filmogènes, des produits coextrudés et des produits polyesters coextrudés.

14. Produit d'isolation selon la revendication 13, dans lequel le retardateur de vapeur (10) est un film de polyester ayant une épaisseur entre 0,075 et 0,125 mm (3 et 5 mils).
